(19)

Europäisches
Patentamt
European
Patent Office
Office européen
des brevets

(11) **EP 4 715 737 A1**

(12) **EUROPEAN PATENT APPLICATION**

(43) Date of publication:
**25.03.2026 Bulletin 2026/13**

(21) Application number: **24465574.2**

(22) Date of filing: **19.09.2024**

(51) International Patent Classification (IPC):
**G06T 7/12** $^{(2017.01)}$

(52) Cooperative Patent Classification (CPC):
**G06T 7/12;** G06T 2207/10081; G06T 2207/10088;
G06T 2207/10116; G06T 2207/20081;
G06T 2207/20084; G06T 2207/30004

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Healthineers AG**
**91301 Forchheim (DE)**

(72) Inventors:
• **Chabin, Guillaume**
**92400 Courbevoie (FR)**
• **Xu, Zhoubing**
**08540-6632 Princeton NJ (US)**

• **Draghia, Alin Madalin**
**500097 Brasov (RO)**
• **Grbic, Sasa**
**08540-6632 Princeton NJ (US)**
• **Ghesu, Florin- Cristian**
**91052 Erlangen (DE)**
• **Kratzke, Lisa**
**91301 Forchheim (DE)**
• **Mistry, Nilesh**
**30327 Atlanta GA (US)**
• **Teichmann, Marvin**
**91052 Erlangen (DE)**

(74) Representative: **Siemens Healthineers
Patent Attorneys
Postfach 22 16 34
80506 München (DE)**

(54) **COMPUTER-IMPLEMENTED METHOD FOR REVIEWING AT LEAST ONE DETERMINED ORGAN CONTOUR IN MEDICAL IMAGING DATA**

(57) The invention relates to a computer-implemented method and a method for reviewing at least one determined organ contour (1) in medical imaging data (2) comprising at least one image (3). The methods comprise: determining the at least one organ contour (1); determining an image uncertainty information (5) describing at least one area of the image (3) with a visual artifact (41); and/or determining an organ contour inaccuracy information (7) describing if the determination of the at least one organ contour (1) is inaccurate; and/or determining a warning information (9) describing a predetermined warning concerning the organ and/or an area surrounding the organ for which the organ contour (1) was determined; determining review data (11) comprising the at least one image (3), the at least one organ contour (1) and at least one of the image uncertainty information (5), the organ contour inaccuracy information (7) and/or the d warning information (9).

FIG 1

EP 4 715 737 A1

**Description**

The invention relates to a computer-implemented method for reviewing at least one determined organ contour in medical imaging data. Moreover, the invention relates to a method for reviewing at least one determined organ contour in medical imaging data, a data processing system and a computer program product.

In preparation of, for example, a radiation therapy treatment of a patient in a clinical environment it may be necessary to detect at least one organ in medical imaging data used for planning the radiation therapy treatment. The organ is an anatomical structure that may be understood as a collection of tissues joined in a structural unit to serve a common function of the patient's body. The organ to be detected may be an organ at risk and thus an organ of the patient that should not experience radiation during the radiation therapy treatment. The organ at risk may be located in the surroundings of a target organ and/or target tumor of the radiation therapy treatment so that the location of the organ at risk is to be considered when planning a radiation application for the radiation therapy treatment. Therefore, organ contours of the organ at risk are determined.

Typically, the radiation therapy treatment is planned by using a software tool that, for example, requires as input details on the target organ and/or target tumor and medical imaging data of the patient. The software tool then may generate a radiation therapy treatment plan or adapt an existing radiation therapy treatment plan. Thereby, the medical imaging data may be analyzed to automatically determine the organ contour of at least one organ at risk that may be relevant for the planned radiation therapy treatment. An accuracy of the detection of the organ contour of the organ at risk is hence important to control the success of the radiation therapy treatment and to limit the risk of complications during the radiation therapy treatment.

US 11,275,976 B2 describes medical image assessment with classification uncertainty. Medical images may be classified by receiving a first medical image. The medical image may be applied to a machine-learned classifier that may be trained on second medical images. A label of the medical image and a measure of uncertainty may be generated. The measure of uncertainty may be compared to a threshold. The first medical image and the label may be output when the measure of uncertainty is within the threshold.

US 11,185,231 B2 describes intelligent multi-scale medical image landmark detection. Intelligent multi scale image parsing determines an optimal size of each observation by an artificial agent at a given point in time while searching for anatomical landmarks.

US 10,600,185 B2 discloses automatic liver segmentation using an adversarial image-to-image network on a three-dimensional medical image of a patient.

It is the object of the invention to provide a particularly reasonable way to review a result of an automated determination of an organ contour in medical imaging data.

The independent claims solve the object.

A first aspect of the invention is related to a computer-implemented method for reviewing at least one determined organ contour in medical imaging data. Reviewing in the sense of the invention means that a valuation, an evaluation and/or an assessment of the determined organ contour may be performed, for example, by a person, in particular a doctor or other medical personnel.

The method comprises determining the at least one organ contour by applying an organ contour module on the medical imaging data. The medical imaging data comprise at least one image of at least a part of at least one organ of a patient. The at least one organ described by the medical imaging data is the at least one organ for which the organ contour is determined. The organ contour module may be a software or a part of a software that is configured to detect organ contours in medical imaging data and thus is the at least one image. The detection of the organ contours may be performed automatically. It is in particular performed without any manual assistance by the person. The at least one image may be a two-dimensional or a three-dimensional image. In a preferred example, the medical imaging data comprises multiple two dimensional images and/or at least one three-dimensional image that show the at least one organ from at least one perspective. The organ contour module finds at least the at least one organ contour in the at least one image. It may be able to determine multiple organ contours of multiple organs in the at least one image.

The computer-implemented method may comprise determining an image uncertainty information. The image uncertainty information describes at least one area of the at least one image with a visual artifact. The image uncertainty information is determined by applying an image uncertainty module. The image uncertainty module may be a software or a part of a software that is executed to determine the image uncertainty information. The image uncertainty information is a measure that provides details on, for example, a quality of the at least one image that is used to determine the organ contour. The image uncertainty information may thus be understood as an assessment of an image-driven aleatoric uncertainty. The visual artifact may be effected by an implant of the patient. Alternatively or additionally, the visual artifact may be effected by imaging problems and/or imaging errors occurring during capturing the at least one image. The imaging problems and/or imaging errors may result in at least one area of the at least one image in which an image content is distorted and/or altered.

Alternatively or additionally, the computer-implemented method may comprise determining an organ contour inaccuracy information. The organ contour inaccuracy information describes if the determination of the at least one organ contour by the organ contour module is inaccurate. The organ contour inaccuracy information is determined by applying an organ contour inaccuracy module. The organ contour inaccuracy module may be a software or a part of a software that is executed to determine the organ contour inaccuracy information. The organ contour inaccuracy module may be applied, for example, on an output of the organ contour module. The organ contour inaccuracy information may thus describe the inaccuracy of the organ contour module. The organ contour inaccuracy information may thus be understood as an assessment of a prediction driven (epistemic) uncertainty. The organ contour determined by the organ contour module may be considered inaccurate if, for example, the determined organ contour inaccuracy is outside of a predetermined inaccuracy range.

Alternative or additionally, the computer-implemented method comprises determining a warning information. The warning information describes a predetermined warning concerning at least a part of the organ. Alternative or additionally, the warning information describes a predetermined warning concerning an area surrounding the organ for which the organ contour was determined. The warning information is determined by applying a warning module. The warning module may be a software or a part of a software that is executed to determine the warning information. The warning information may be a static predetermined warning. The warning information may be independent of the organ contour module and/or the at least one image. This means that the warning information may describe a predetermined warning that may be the same for all organ contour determinations performed on medical imaging data. The warning information is thus not specific for the used medical imaging data.

The computer-implemented method comprises determining review data. The review data comprises the at least one image and the determined at least one organ contour. Moreover, the determined review data may comprise the determined image uncertainty information and/or the determined organ contour inaccuracy information and/or the determined warning information. It may comprise at least one of these three information. This means that the review data may provide details on visual artifacts and/or details on inaccurate organ contour detection and/or predetermined warnings concerning, for example, the organ and surrounding of the organ for which the organ contour was determined. This means that a detail review of the at least one determined organ contour is possible due to the fact that the review data comprises the image uncertainty information, the organ contour inaccuracy information and/or the warning information. In a preferred example, the review data comprises the image uncertainty information, the organ contour inaccuracy information and the warning information. The review data provide a particularly reasonable way to review a result of an automated determination of an organ contour in medical imaging data.

In the sense of the invention, the expressions "uncertainty" or "certainty" are used to describe an image quality, in particular the presence of visual artifacts. The expressions "inaccuracy" or "accuracy" are used to describe a quality of the determination of the at least one organ contour by the organ contour module. In an example, these expressions may be interchanged.

In a preferred example, the described computer-implemented method is used to determine the organ contour of at least one organ at risk, for example, during radiation therapy treatment planning. The organ at risk is an organ that is at least partially surrounding a target of the radiation therapy treatment, such as a target organ, a specific part of a target organ and/or a target tumor.

An embodiment comprises that applying the organ contour module comprises receiving a request information describing the at least one organ for which the organ contour is requested. The computer-implemented method may be at least based on the observation that the person who is interested in reviewing the at least one determined organ contour may first provide details on the organ for which the organ contour is requested. Therefore, the request information may be provided by the person and then received by the computer-implemented method. In an example, the computer-implemented method may comprise receiving a target information describing the target organ and/or target tumor. The computer-implemented method may then comprise determining the request information by analyzing the received tumor information and providing the determined request information.

Applying the organ contour module comprises determining a region of interest in the at least one image. The region of interest is a part of the at least one image in which the at least one organ is at least partially located. The region of interest is determined by applying a region of interest module on the at least one image and the received request information. The region of interest is, for example, a specific area in the at least one image in which the organ for which the organ contour is requested is at least expected to be located. The region of interest module is a software or a part of a software that is executed to determine the region of interest in the at least one image. The region of interest may be described by at least one pixel of the at least one image.

Applying the organ contour module comprises determining the at least one organ contour of the at least one organ by applying an organ specific neuronal network module on the determined region of interest in the at least one image. The organ specific neural network module may be chosen based on the request information. This means that the received request information may define which neural network module out of multiple neural network modules is applied to determine the at least one organ contour. It is thus possible to pick at least one out of multiple neuronal network modules that are each configured to determine the at least one organ contour for one specific organ. The neural network modules available are thus organ specific. For example, if the organ contour is requested for a left kidney according to the request information, a left kidney specific neuronal network module may be applied to determine the organ contour of the left kidney. The left kidney specific neuronal network module may differ at least partially from other neuronal network modules that are specific for detecting the organ contours of other organs such as, for example, a right kidney, a brain, a heart, a lung and/or a liver of a patient. Other and/or additional organ specific neural network modules may be possible. The computer-implemented method may have access to multiple organ specific neural network modules. It may comprise choosing at least one of them when applying the organ contour module under consideration of the received request information. This results in a particularly precise and reliable determination of the organ contours.

In other words, a target image, meaning the at least one image, may be imported and loaded for the execution of the organ contour module. A list of requested organs, meaning the request information, may be defined from a user input. Alternatively, it may be retrieved from a system configuration. Based on the list of requested organ contours, the computer-implemented method may determine the at least one region of interest that has to be detected in the at least one image. Besides, at least one AI-based contouring agent, meaning at least one organ specific neural network module, may be chosen that is required to generate the requested organ contour or organ contours. The organ contour module may then prepare the at least one image for the region of interest detection and feed it to the region of interest module to parse the at least one image and build an internal representation of the anatomy present in the at least one image. For example, the region of interest module may be understood as a multiscale agent to detect and localize a set of anatomical landmarks to find the region of interest in the at least one image. The multiscale agents may be trained a priory and deployed. Afterwards, the determined region of interest may be used for an internal representation of the anatomy of the patient. The organ specific neuronal network module may run on the results of the region of interest module, meaning on the set of anatomic landmarks located in the at least one image.

The organ specific neural network module may be trained a priory by being applied on a training data set during a training process. The training data set comprises multiple images of organs of patients and thus multiple medical imaging data. After the training process, the organ specific neural network module is trained to determine the organ contour of one specific kind of organ when at least one image describing an organ of the specific kind of organ is fed to the trained organ specific neural network module. The neural network module is at least a part of an artificial neural network. The used training process may at least be based on supervision, in particular with adversarial blocks and/or deep supervision. In an example, the organ specific neural network module may be a convolutional neural network.

Another embodiment comprises that if the received request information describes multiple organs and that applying the organ contour module comprises determining multiple organ contours. The determined multiple organ contours are then aggregated. This means that the computer-implemented method comprises aggregating the multiple determined organ contours in a unified organ contour representation. The unified organ contour representation may be an image in which all determined organ contours are marked or otherwise highlighted. The image may be the at least one image or a combination of multiple images if the organ contour module is applied on multiple images. For example, all organ contours determined for at least parts of organs described by the at least one image may be considered and collected in the unified organ contour representation. This allows, for example, to combining the determination of multiple organ contours without having to perform the computer-implemented method individually for each requested organ. This is particularly time saving.

A further embodiment comprises that applying the organ contour module comprises applying at least one image processing module. The image-processing module may be applied before determining the region of interest. Alternative or additionally, it may be applied before applying the organ specific neuronal network module. Alternative or additionally, it may be applied after applying the organ specific neuronal network module. Alternative or additionally, the at least one image processing module may be applied after aggregating the multiple determined organ contours in the unified organ contour representation. In an example, applying the organ contour module may comprise applying four image-processing modules. In a particularly preferred example, these four applied image processing modules are each different from one another.

For example, the image processing module that is applied before determining the region of interest may be used to adapt the at least one image to a resolution and/or image size that is required by the organ specific neuronal network module that may be applied on an output of this image processing module. The image processing module that is applied before applying the organ specific neuronal network module may comprise changing intensities, color and/or resolution of the at least one image or an output of the region of interest module to adapt to specifics of the organ specific neuronal network module. This image processing module may thus depend on the used organ specific neural network module. The image processing module applied after applying the organ specific neuronal network module may be understood as a post processing module that may perform post processing individually for the organ contour that is output by the organ specific neuronal network module. This post processing may depend on the applied organ specific neuronal network module and may be different for different organ specific neuronal network modules. The image-processing module that may perform the described post processing may smooth the determined organ contour. Alternatively or additionally, it may correct and/or remove components and/or parts of the determined organ contour. The image processing module applied after aggregation may perform post processing of the aggregated organ contours, meaning of the unified organ contour representation. This image processing module may reduce interferences between individual organ contours that were determine by two different organ specific neuronal network modules, such as intersections of multiple organ contours and/or shared organ contours. This is based on the observation that one organ contour cannot be the organ contour of another organ as well. For example, a first organ and a second organ cannot share one organ contour, but there has to be one individual organ contour for the first organ and another one for the second organ. Besides, organ contours never intersect or cross. Such errors in the unified organ contour representation may be corrected by means of the image processing module that may erase intersections of organ contours and/or separate coinciding organ contours.

The organ contour that may be provided after applying the at least one image processing module on the aggregated organ contours and thus the unified organ contour representation may be understood as a curated organ contour. The curated organ contour may be understood as an output of the organ contour module that may be saved for subsequence steps of the computer-implemented method.

The at least one image processing module may be based on artificial intelligence techniques. It may comprise at least a part of a neuronal network and/or a neural network module. Alternative or additionally, the at least one image processing module may be based on image processing techniques.

It is possible to prepare and preprocess the at least one image and/or an input of the region of interest module and/or the organ specific neural network module. Alternatively or additionally, it is possible to postprocess data generated by the organ specific neuronal network module and/or the unified organ contour representation. This may contribute to generate a raw initialization of contours scoped for the organ contour module. Applying the at least one image processing module may at least contribute to improve correctness of the determined at least one organ contour.

A preferred embodiment comprises that the image uncertainty module comprises at least one neuronal network module. The neural network module may be understood as an artificial neural network, in particular a convolutional neural network. The neuronal network module may be trained a priory to detect at least one predetermined visual artifact in an image. It is thus possible to rely on methods of artificial intelligent to detect the visual artifacts in the at least one image. The neuronal network module may be different from the organ specific neural network module. It may be trained in a training process under consideration of a training data set. The training data set comprises multiple images of organs with or without visual artifacts. For example, a set of deep images to images networks are trained a priory and deployed. Each one of these networks is trained to detect a set of visual artifacts in a set of anatomic regions and hence in images of different organs. The trained neural network module determines the image uncertainty information if the at least one image that is fed to the organ contour module if this at least one image is fed to the trained neural network module. The image uncertainty information may be determined precisely and fast, because the image uncertainty module is based on artificial intelligence techniques.

Moreover, an embodiment comprises that the image uncertainty module determines the image uncertainty information on organ level and/or image pixel level. It is thus possible to determine which organ the visual artifact concerns. However, it is also possible to determine precisely which pixels in the at least one image are concerned by the visual artifact. In an example, only a part of the organ may be concerned by the visual artifact. Then, only this part of the organ may be described by the image uncertainty information. In this case, the image pixels describing the part of the organ may be described by the image uncertainty information. Thus, the image uncertainty module is able to detect regions with high risk of inaccurate segmentation due to the inherent uncertainty contained in the at least one image and provide details on the detected regions.

By correlating the information from internal results, such a segmentation heat maps or predicted uncertainty, saved with the corresponding image intensities, the computer-implemented method automatically evaluates the level of visibility of each organ in the at least one image. If this level is below a given threshold for a given region of interest, the organ specific neuronal network module that determines the organ contour may require a thorough review, meaning that the review data should comprise the image uncertainty information. In order to detect the image uncertainty information at an organ level, a classification network may be used. Image uncertainties at a pixel level however may be determined using segmentations network as the used neural network module, such as deep images to images networks. It is also possible to leverage local statistics such as a histogram and/or an intensity diagram of the image around the organ for which the organ contour is detected to detect and quantify the image's patterns that are markers of a lack of organ visibility and thus of visual artifacts in the image.

An embodiment comprises that the organ contour inaccuracy module is applied on a prediction score output by the organ contour module. The prediction score may be a measure of a precision of the output of the organ contour module. The prediction score may be understood as a probability value that describes with which probability the organ contour module determines the organ contour without any mistake. The prediction score thus may be understood as a measure of how close the output of the organ contour module is to the actual organ contour. The prediction score may be a percentage value between 0 percent and 100 percent. Then, 0 percent may indicate that the organ contour module determines a completely wrong organ contour, and 100 percent may indicate that the prediction of the organ contour performed by the organ contour module predicts the organ contour accurately, or vice versa. The prediction score thus describes how accurate the organ contour module works. The prediction score is easy to obtain in case the organ contour module comprises at least a part of a neural network, such as the organ specific neural network module, because neural networks typically provide prediction scores directly. Besides, the prediction score offers an accurate assessment of the quality of the organ contour module output.

Moreover, an embodiment comprise that the organ contour inaccuracy module determines the organ contour inaccuracy information on an image pixel level. The determined organ contour inaccuracy information describes the image pixels in the at least one image that are a part of the determined organ contour for which the prediction score is larger than a predetermined threshold. Alternative or additionally the determined organ contour inaccuracy information describes a gradient of the prediction scores of the image pixels in the at least one image that are a part of the determined organ contour. It is thus possible to define inaccurate determination of the at least one organ contour by the organ contour module under consideration of the predetermined threshold. The predetermined threshold may be, for example, 0.2 or 20 percent. Other thresholds are possible.

In other words determining the organ contour inaccuracy information comprises detecting regions of interests in the at least one image with high risk of inaccurate segmentation due to the inaccuracy inserted by the contouring agents and thus the organ specific neural network module of the organ contour module. For each one of the organ specific neuronal network modules the computer-implemented method may comprise analyzing the output of the organ specific neuronal network module and detecting portions of the organ contours that are inferred using a low model prediction score. It is, for example, possible to compare for a given voxel, meaning for a given point in a three-dimensional image, the prediction scores of each organ specific neuronal network module used. Correlations between the prediction scores for each organ on an image pixel level may be correlated with anatomical relationships of the organs (mutually exclusive or inclusive). For each voxel, if for a subset of contours the prediction scores are inconsistent with anatomical relationships, the computer-implemented method may mark the voxel for the set of organs. The computer-implemented method may cluster the marked voxels for each organ and highlight regions with a high density of marked voxels. These are thus the voxels that may be described by the organ contour inaccuracy information. It is also possible to output a gradient of the prediction scores for each contour and highlight the contour segments after applying the thresholding method, meaning under consideration of the predetermined threshold. It is also possible to detect regions with substantial risk of prediction driven inaccuracy by inferring and thus determining one or a set of neuronal networks that are a priory trained to detect prediction errors from paired prediction heat maps and images. The organ contour inaccuracy module may thus rely on methods of artificial intelligence. It may be at least a part of an artificial neuronal network trained in a training process under consideration of a training data set comprising multiple training images, which are images of organs.

A further embodiment comprises that the warning module comprise a predetermined list of multiple predetermined warnings concerning multiple organs and/or areas surrounding at least one of the multiple organs. Applying the warning module comprises determining all predetermined warnings in the predetermined list that concern the organ for which the organ contour was determined and/or another organ described by the at least one image. The warning information may thus be independent of the organ for which the organ contour is determined.

The organ and/or areas surrounding the organ for which there is a warning information may be understood as critical zones. Even if, for example, no image driven or prediction driven uncertainty is detected, meaning that there is no image uncertainty information and organ contour inaccuracy information due to a lack of visual artifacts and a high accuracy of the applied organ contour module, it is possible to prepare guided review data for a set of critical zones, which are here the warnings described by the predetermined list. The organ and/or area surrounding the organ for which there is the warning may be described by an anatomic location, a set of organs and/or a review instruction. The warnings of the list are in priory specified, for example, manually by the person. It is possible to remove a warning from or add a warning to the list, in particular automatically or manually. The anatomical location can be defined as an intersection of multiple structures. An anatomical location for which a warning may be comprised by the list may be an intersection of brainstem and spinal cord. This intersection is, for example, an area in which there should be no gab detected by the computer-implemented method between the organ contour of the brainstem and the organ contour of the spinal cord. Therefore, the warning information may comprise the remark that a user should check a connectivity between the brainstem and the spinal cord. If there is no connectivity, there is an error in organ contour detection.

Alternative or additionally, the waning may concern an area relative to an anatomical landmark, for example, an area 3 centimeter left of a liver dome. Alternative or additionally, the waning may concern an area relative to a structure, such as a center of a bladder, for example. Detected organs and/or areas surrounding the organs for which the list comprises a warning may be marked in the review data, in particular in the unified organ contour representation. The computer-implemented method may then represent each marked organ and/or areas in a standard anatomical atlas. The computer-implemented method may comprise registering the anatomical atlas with the at least one image and/or the anatomical representation that was determined by applying the organ specific neuronal network module. The warning information is thus information that may be provided for the reviewing even if a high enough image quality and/or organ contour module quality is provided to point out particularly problematic and/or difficult parts in medical imaging data.

Another aspect of the invention relates to a method for reviewing the at least one determined organ contour in medical imaging data. The method comprises acquiring medical imaging data comprising at least one image of at least a part of at least one organ. A medical imaging device may perform the acquiring. The medical imaging device may be a magnetic resonance imaging (MRI) device, a computer tomography (CT) device, and/or an x-ray device. Other methods to acquire the medical imaging data may be applied in an alternative embodiment. Acquire medical imaging data may be understood as capturing medical imaging data and providing it to, for example, a data processing system that performs the computer-implemented method.

The method comprises performing a computer-implemented method as described above. Furthermore, the method comprises outputting the determined review data determined by the computer-implemented method by an output device. The output device may be a screen of the data processing system and/or a screen independent of the data processing system. The output device may be a computer screen, a medical device screen, a tablet screen and/or a smartphone screen. Other output devices are possible. The output device may comprise a loudspeaker that may output sounds and/or spoken voice.

An embodiment of the method comprises that the output review data provides the at least one image superimposed with the determined at least one organ contour and/or superimposed with multiple options for the organ contour. If, for example, due to the image uncertainty information and/or the organ contour inaccuracy information it is not possible to define one specific organ contour with a high enough certainty and/or accuracy, the organ contour module may determine multiple options for the organ contour and provide these multiple options. If the determined image uncertainty information concerns the at least one organ contour and/or the determined organ contour inaccuracy information describes that the determination of the at least one organ contour by the organ contour module is inaccurate, these multiple options may be provided. It is then possible for the person to choose or pick one of the multiple options for the organ contour as the organ contour that is the most accurate. The chosen or picked organ contour may then be considered when planning the radiation therapy treatment. In general the output review data may show the at least one image in which at least one organ contour is displayed. This is done by overlaying the at least one image, for example, with a visualization of the organ contour. This is particularly useful to illustrate the determined at least one organ contour.

According to another embodiment of the method, the output review data provides the determined image uncertainty information and/or the determined organ contour inaccuracy information and/or the determined warning information by text notification. Alternatively or additionally, it may provide it by a bounding box and/or a color-coded marking and/or a hatching-coded marking superimposing the at least one image. For example, at least one of the three information may be made accessible to the person by text, meaning by the text notification. The text notification may be a text, in particular including at least one symbol. The text notification may be displayed at an edge or another part of the at least one image. It may be displayed on top of the at least one image.

The bounding box may be used to point out a specific area in the at least one image that is concerned by the image uncertainty information, the organ contour inaccuracy information and/or the warning information. The color-coded and/or hatching-coded markings are particularly useful if a gradient of the prediction scores is described by of the organ contour inaccuracy information so that this gradient may be visualized by markings in the image that comprise details on local differences in organ contour inaccuracy depending on color and/or hatching. For example, in an area around the visual artifacts a high uncertainty may be shown by a marking in a first color and/or with a first hatching and a lower uncertainty by a marking in a second color and/or with a second hatching. This makes it particularly easy, especially in combination with the text notification, to provide an easy to understand review of the determined organ contour.

A further embodiment of the method comprises that the output review data provides an interactive review menu. The interactive review menu lists the determined image uncertainty information, the determined organ contour inaccuracy information and/or the determined warning information. Moreover, it may link each one of these information to at least one pixel of the at least one image for which the image uncertainty information, the organ contour inaccuracy information and/or the warning information was determined, respectively. The interactive review menu may provide an interface for the person to navigate through the output information to have access to the details determined by the computer-implemented method that are comprised by the review data. In other words, a guided review manual, which is interactive and synchronized with, for example, the acquired medical imaging data is provided. A user may navigate in the at least one image to the regions of interests or the organs to review these areas and see an overall status of the review. This is particularly intuitive and manageable for the person.

In summary the output review data may support the review with the text notification overlaid on the at least one image and/or with a bounding box overlaying the at least one image and/or by displaying an uncertainty heat map, meaning a gradient like structure (color-coded and/or hatching-coded marking) that overlays the at least one image. However, it is also possible to review a set of proposition contours that the user may choose from which may be provided by displaying the multiple options for the organ contours.

The embodiments described in connection with the computer-implemented method, both individually and in combination with each other, apply accordingly, insofar as applicable, to the method. The embodiments described in connection with the method, both individually and in combination with each other, apply accordingly, insofar as applicable, to the computer-implemented method.

Unless stated otherwise, all steps of the computer-implemented method may be performed by a data processing system, which comprises at least one data processing device. In particular, the at least one data processing device is configured or adapted to perform the steps of the computer-implemented method. For this purpose, the at least one data processing device may, for example, store a computer program comprising instructions which, when executed by the at least one data processing device, cause the at least one data processing device to execute the computer-implemented method. The expressions "data processing system" and "at least one data processing device" may be used interchangeably, here and in the following. This holds also for respective expressions derived therefrom.

In case the at least one data processing device comprises two or more data processing devices, certain steps carried out by the at least one data processing device may also be understood such that different data processing devices carry out different steps or different parts of a step. In particular, it is not required that each data processing device carries out the steps completely. In other words, carrying out the steps may be distributed amongst the two or more data processing devices.

From each implementation of the computer-implemented method, a respective implementation of a method for reviewing at least one determined organ contour in medical imaging data, which is not purely computer-implemented, is obtained by including respective steps of generating medical imaging data and outputting the determined review data.

According to a further aspect of the invention, a computer program comprising instructions is provided. When the instructions are executed by a data processing system, the instructions cause the data processing system to carry out a method according to the invention.

The instructions may be provided as program code, for example. The program code can for example be provided as binary code or assembler and/or as source code of a programming language, for example C, and/or as program script, for example Python.

According to a further aspect of the invention, a computer-readable storage medium, in particular a tangible and/or non-transient computer readable storage medium, storing a computer program according to the invention is provided.

The computer program and the computer-readable storage medium are respective computer program products comprising the instructions.

Independent of the grammatical term usage, individuals with male, female or other gender identities are included within the term.

The embodiments described in connection with the computer-implemented method and/or the method, both individually and in combination with each other, apply accordingly, insofar as applicable, to the data processing system and/or the computer program product. The invention comprises combinations of the described embodiments.

The figures show in:

FIG 1    a schematic representation of a computer-implemented method for reviewing at least one determined organ contour in medical imaging data,

FIG 2    a schematic represention of steps of an organ contour module to determine at least one organ contour,

FIG 3    a schematic representation of an example of output review data,

FIG 4    a schematic representation of a second example of output review data,

FIG 5    a schematic represention of a third example of output review data,

FIG 6    a schematic represention of an artificial neural network, and

FIG 7    a schematic represention of a convolutional neural network.

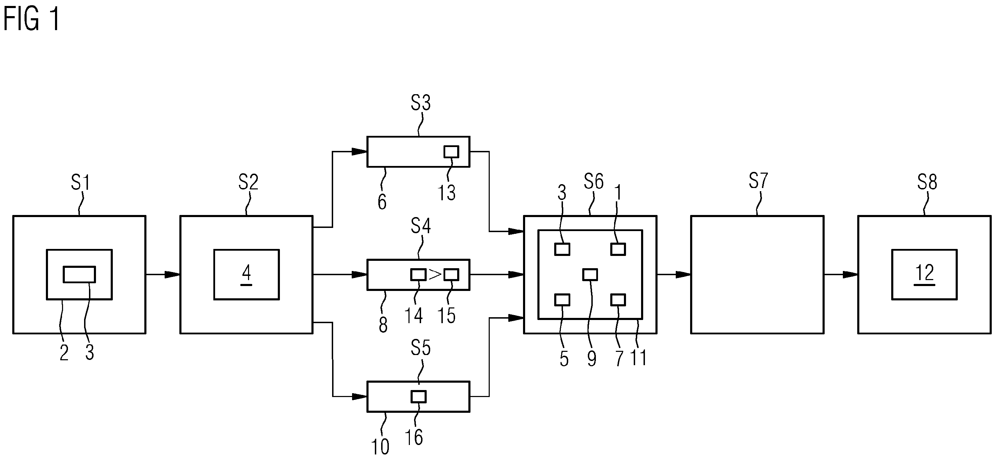

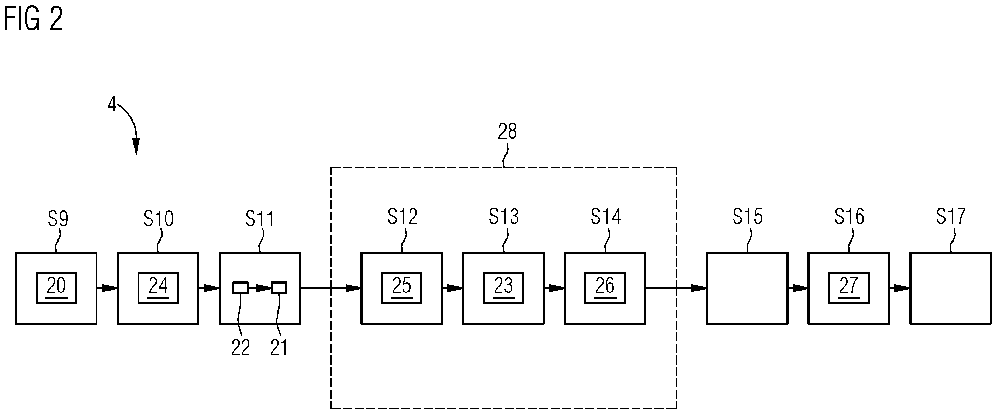

FIG 1 shows steps of a computer-implemented method for reviewing at least one determined organ contour 1 in medical imaging data 2. The medical imaging data 2 comprise at least one image 3 of at least a part of at least one organ of a patient. In a step S1 the computer-implemented method may comprise loading the medical imaging data 2 which is at least the at least one image 3. If multiple images 3 are loaded it is possible to determine the organ contour 1 in the multiple loarded images 3. A step S2 may comprise determining at least one organ contour 1 by applying an organ contour module 4 on the medical imaging data 2, more precisely on the at least one image 3. The step S2 may be understood as an initialization of an organ contour determination. Details of step S2 are described further below in connection with FIG 2.

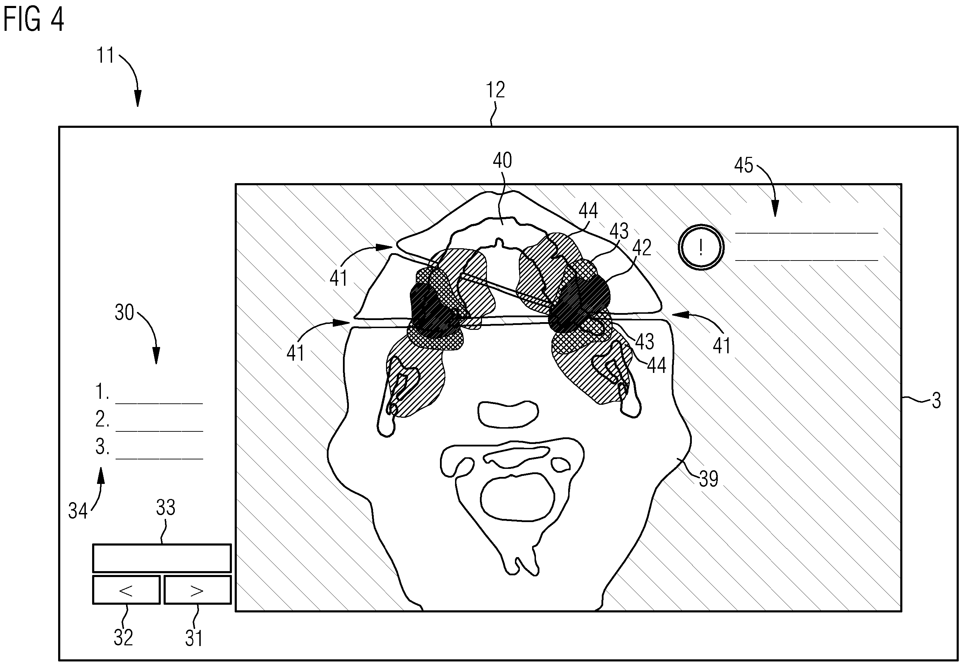

In a step S3, the computer-implemented method may comprise determining an image uncertainty information 5 that describes at least one area of the at least one image 3 with a visual artifact 41 (see reference 41 in FIG 4). In step S3 an image uncertainty module 6 may be applied. Alternative or additionally in a step S4, the computer-implemented method may comprise determining an organ contour inaccuracy information 7 that describes if the determination of the at least one organ contour 1 by the organ contour module 4 is inaccurate. It may be determined by applying an organ contour inaccuracy module 8. Alternative or additionally in a step S5, the method may comprise determining a warning information 9 that describes a predetermined warning concerning at least a part of the organ and/or an area surrounding the organ for which the organ contour 1 was determined. The warning information 9 may be determined by applying a warning module 10.

A step S6 may comprise determining review data 11. The review data 11 may comprise the at least one image 3 and the determined at least one organ contour 1. Moreover, it may comprise the determined image uncertainty information 5 and/or the determined organ contour inaccuracy information 7 and/or the determined warning information 9. A step S7 may comprise saving the determined review data 11 in a storage unit of a data processing system that may perform the computer-implemented method. In a step S8 the determined review data 11 may be output by an output device 12. This means that in step S7 the computer-implemented method may end and a method for reviewing the at least one determined organ contour 1 in medical imaging data 2 may continue. The display device 12 may be a screen, such as a computer screen, a screen of a medical device, a tablet screen and/or a smartphone screen. The output device 12 may be part of a medical device that may acquire the medical imaging data 2 and/or may be separate from it. Before step S1, the medical imaging data 2 may be acquired by a medical imaging device. The medical imaging data 2 may be x-ray data, magnetic resonance imaging (MRI) data and/or computer tomography (CT) data.

The image uncertainty module 6 may comprise at least one neuronal network module 13 trained a priory to detect at least one predetermined visual artifact 41 in the image 3. The image uncertainty module 6 may determine the image uncertainty information 5 on organ level and/or on image pixel level.

The organ contour inaccuracy module 8 may be applied on a prediction score 14 output by the organ contour module 4. The organ contour inaccuracy module 8 may determine the organ contour inaccuracy information 7 on an image pixel level. The determined organ contour inaccuracy information 7 may describe the image pixels in the at least one image 3 that are part of the determined organ contour 1 for which the prediction score 14 is larger than the predetermined threshold 15. Alternative or additionally, it may describe a gradient of the prediction scores 14 of the image pixels in the at least one image 3 that are part of the determined organ contour 1.

The warning module 10 may comprise a predetermined list 16 of multiple predetermined warnings concerning multiple organs and/or areas surrounding at least one of the multiple organs. Applying the warning module 10 may comprise determining all predetermined warnings in the predetermined list 16 that concern the organ for which the organ contour 1 was determined and/or another organ described by the at least one image 3.

FIG 2 describes the organ contour module 4 in more detail. When applying the organ contour module 4 the method may comprise in a step S9 receiving a request information 20 that describes the at least one organ for which the organ contour 1 is requested. In this step, the computer-implemented method may comprise determining organ specific neuronal network modules 23 that are required to determine the organ contours 1 that are requested. If the organ contours 1 are requested, for example, for a left kidney and a liver, a left kidney specific neural network module and a liver specific neuronal network module may be provided and used in the following.

In a step S10, an image processing module 24 may be applied. Afterwards in a step S11, the computer-implemented method may comprise determing a region of interest 21 in the at least one image 3 in which the at least one organ is located. The region of interest 21 may be determined by applying a region of interest module 22 on the at least one image 3 and the received request information 20.

Afterwards steps S12, S13 and S14 may be applied for each organ specific neuronal network module 23 that is required due to the request information 20. The step S12 may comprise applying an image processing module 25 that is applied before applying the organ specific neuronal network module 23. The organ specific neuronal network module 23 is applied on the determined region of interest 21 in the at least one image 3 to determine the at least one organ contour 1 of the at least one organ in step S13. In step S14, an image processing module 26 may be applied. It is thus applied after applying the organ specific neuronal network module 23 as part of a post processing routine.

A step S15 may comprise aggregating multiple determined organ contours 1 in a unified organ contour representation in case the received request information 20 describes multiple organs. Then, the organ contour module 4 determines multiple organ contours 1 in particular by applying multipe organ specific neuronal network modules 23 in step S13. A step S16 may comprise applying an image processing module 27 that is applied after aggregating the multiple determined organ contours 1 in the unified organ contour representation. This is also a post processing step to correct errors of the aggregating. A step S17 may comprise exporting and saving the determined organ contour 1, for example, in the storage unit of the data processing device.

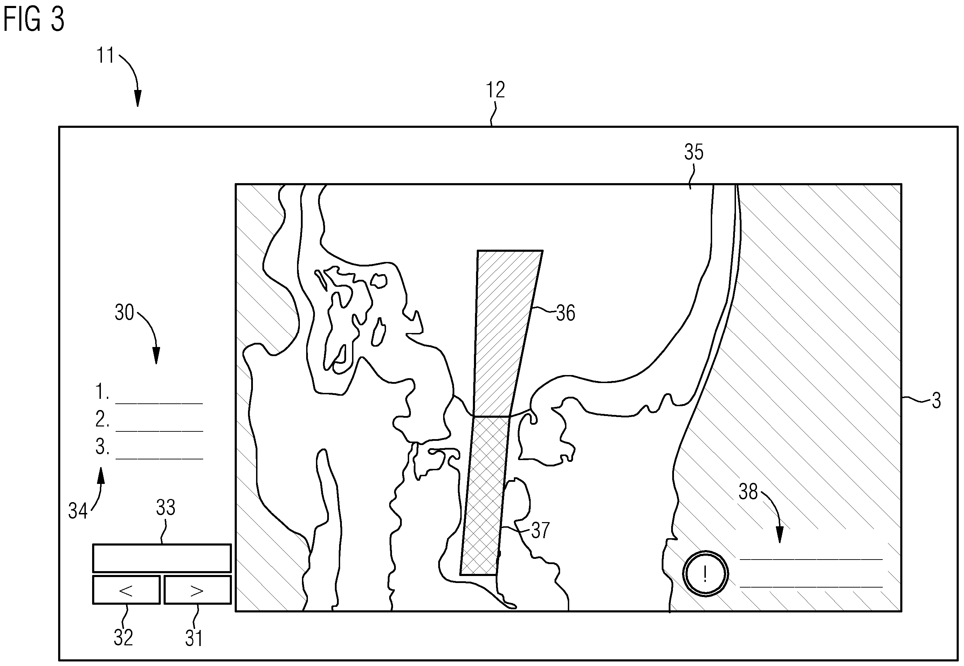

FIG 3, FIG4 and FIG 5 show different examples to output the review data 11. These examples are only to be understood as examples. Other ways to output the review data 11 and/or other organs and/or organ contours 1 are covered by the invention. The review data 11 may be output in a screen of the output device 12.

In FIG 3 the output review data 11 may provide an interactive review menu 30 that lists the determined image uncertainty information 5, the determined organ contour inaccuracy information 7 and/or the determined warning information 9. It is possible to link each one of these informations 5, 7, 9 to at least one pixel and/or pixel area of the at least one image 3 for which the image uncertainty information 5, organ contour inaccuracy information 7 and/or warning information 9 is determined, respectively. The review menu 30 may comprise a forward key 31 to move to a next image 3 and/or a backward key 32 to switch back to a previously shown image 3. Moreover, there may be a key 33 that marks an image 3 as a reviewed image 3.

The output review data 11 may comprise a list of text notifications 34 that are available in total. Different entries on the list of text notifications 34 do not have to be provided for one particular image 3 but may be provided for also images comprised by the review data 11 at once even if they are linked to different images 3 that are only acessable by clicking the forward key 31.

The image 3 shown here is an image 3 of a brain 35 of a patient. The organ contours 1 superimposing the image 3 are here the organ contours 1 for a brainstem 36 and a spinal cord 37. Moreover, a first text notification 38 may be positioned on the screen. This first text notification 38 may comprise the warning that a connectivity between the brainstem 36 and the spinal cord 37 should be checked because this is a critical area in the image 3 and in the output of the organ contour module 4. The person should thus check if the connectivity between the brainstem 36 and the spinal cord 37 was determined by the computer-implemented method. It is possible that the text notification 38 is presented superimposed to the at least one image 3. The first text notification thus describes the warning information 9.

FIG 4 shows an image 3 of a head 39 of a patient, more precicely of a jaw 40. In this example, a hatching-coded marking 42, 43, 44 is provided. It is used to indicate a visual artifact 41. The hatching-coded marking 42, 43, 44 may be a color-coded marking alternatively or additionally. The hatching-coded marking 42, 43, 44 differentiates between three different hatchings that indicate a distance to the visual artifact 41. FIG 4 illustrates the display of the image uncertainty information 5. A second text notification 45 may comprise the information that an image uncertainty is detected so that the counters for an oral cavitiy and/or lips should be checked manually.

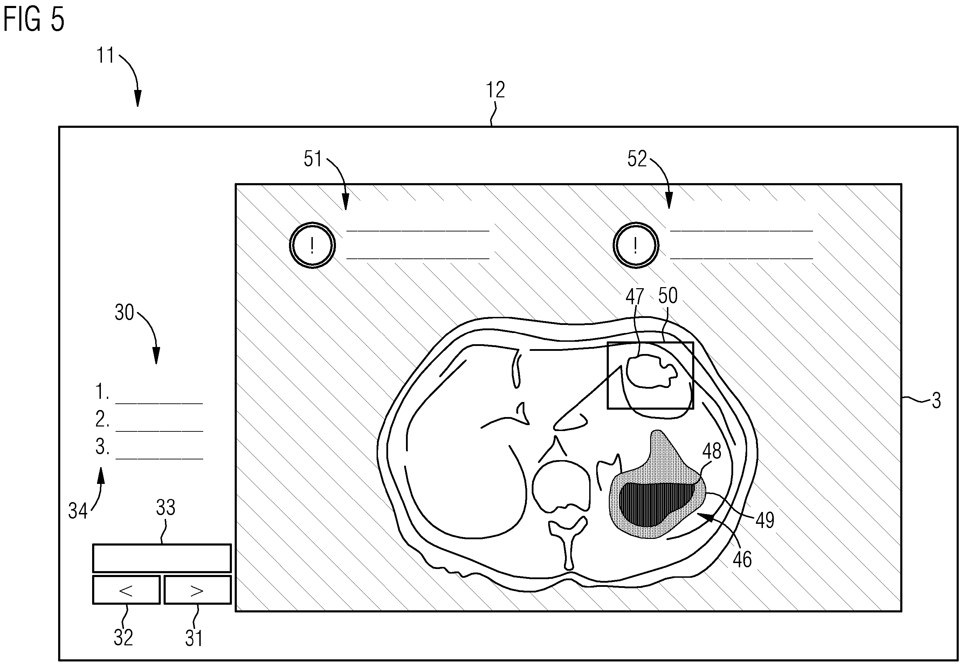

FIG 5 shows a cross section image 3 of an upper body of the patient, in particular a left kidney 46 and another organ 47. As an example, a bounding box 50 may be displayed to illustrate which part of the image 3 is of particular interest and may be adressed by a third text notification 51. The third text notification 51 may comprise the information that an module uncertainty was detected so that the contours for the left kidney 46 and/or for the other organ 47 should be checked. Here, the determined organ contour inaccuracy information 7 is provided for review.

Alternative or additionally, the displayed image 3 may provide multiple options 48, 49 for the organ contour 1. This is scetched here for the left kidney 46. A possible fourth text notification 52 may comprise the information that a module uncertainty (organ contour inaccuracy information 7) is detected so that the organ contours 1 for the left kidney 46 should be checked.

The person may choose between the two scotched options 48, 49 and pick manually the best fit for the corgan ontour 1 of the left kidney 46. This means that the output review data 11 may provide the at least one image 3 superimposed with the determined at least one organ contour 1 and/or with multiple options 48, 49 for the organ contour 1. Showing the options may be particularly useful if the determined image uncertainty information 5 concerns the at least one organ contour 1 and/or if the determined organ contour inaccuracy information 7 describes that the determination of the at least one organ contour 1 by the organ contour module 5 is inaccurate.

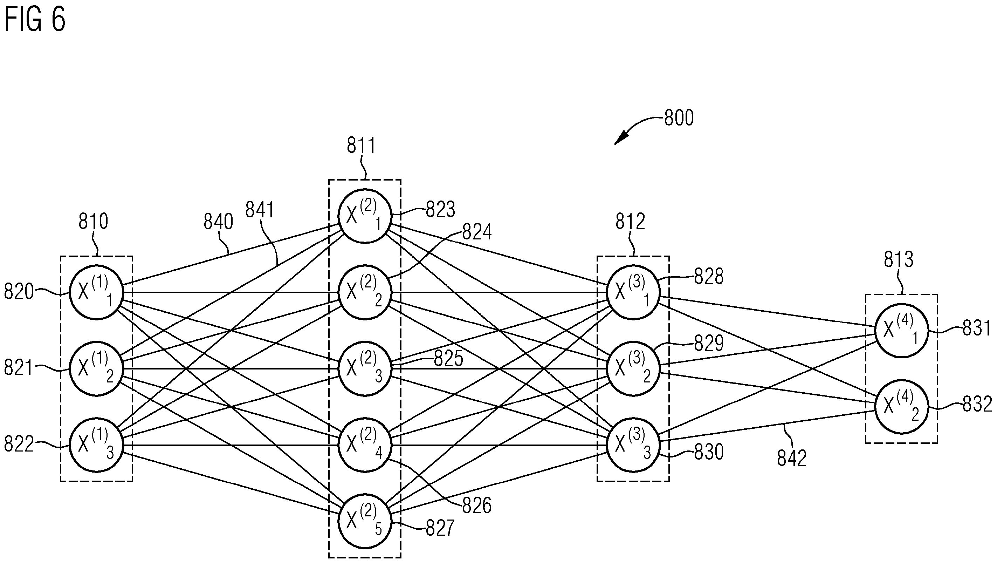

FIG 6 displays an embodiment of an artificial neural network (ANN) 800, which is for example designed as a multilayer-perceptron (MLP). The organ specific neural network module 23 and/or the neural network module 13 may be an ANN 800 or may comprise an ANN 800. The ANN 800 comprises nodes 820, ..., 832 and edges 840, ..., 842, wherein each edge 840, ..., 842 is a directed connection from a first node 820, ... , 832 to a second node 820, ... , 832. In general, the first node 820, ... , 832 and the second node 820, ... , 832 are different nodes 820, ... , 832. It is, however, also possible that the first node 820, ... , 832 and the second node 820, ... , 832 are identical. For example, in FIG 6 the edge 840 is a directed connection from the node 820 to the node 823, and the edge 842 is a directed connection from the node 830 to the node 832. An edge 840, ... , 842 from a first node 820, ..., 832 to a second node 820, ... , 832 is also denoted as ingoing edge for the second node 820, ... , 832 and as outgoing edge for the first node 820, ... , 832.

In this example, the nodes 820, ... , 832 of the artificial neural network 800 can be arranged in layers 810, ... , 813, wherein the layers can comprise an intrinsic order introduced by the edges 840, ... , 842 between the nodes 820, ... , 832. In particular, edges 840, ... , 842 can exist only between neighboring layers of nodes. In the displayed example, there is an input layer 810 comprising only nodes 820, ... , 822 without an incoming edge, an output layer 813 comprising only nodes 831, 832 without outgoing edges, and hidden layers 811, 812 in-between the input layer 810 and the output layer 813. In general, the number of hidden layers 811, 812 can be chosen arbitrarily. In an MLP, this number is at least one. The number of nodes 820, ..., 822 within the input layer 810 usually relates to the number of input values of the artificial neural network 800, and the number of nodes 831, 832 within the output layer 813 usually relates to the number of output values of the artificial neural network 800.

In particular, a real number can be assigned as a value to every node 820, ... , 832 of the artificial neural network 800. Here, $x^{(n)}_i$ denotes the value of the i-th node 820, ... , 832 of the n-th layer 810, ... , 813. The values of the nodes 820, ... , 822 of the input layer 810 are equivalent to the input values of the artificial neural network 800. The values of the nodes 831, 832 of the output layer 813 are equivalent to the output value of the artificial neural network 800. Furthermore, each edge 840, ... , 842 can comprise a weight being a real number. In particular, the weight is a real number within the interval $[-1, 1]$ or within the interval $[0, 1]$. Here, $w^{(m,n)}_{i,j}$ denotes the weight of the edge between the i-th node 820, ... , 832 of the m-th layer 810, ... , 813 and the j-th node 820, ... , 832 of the n-th layer 810, ... , 813. Furthermore, the abbreviation $w^{(n)}_{i,j}$ is defined for the weight $w^{(n,n+1)}_{i,j}$. In particular, to calculate the output values of the neural network 800, the input values are propagated through the neural network 800. In particular, the values of the nodes 820, ... , 832 of the (n+1)-th layer 810, 813 can be calculated based on the values of the nodes 820, ... , 832 of the n-th layer 810, ..., 813 by

$$x_j^{(n+1)} = f \left( \sum_i x_i^{(n)} \, w_{i,j}^{(n)} \right)$$

Herein, the function f is denoted as transfer function or activation function. Known transfer functions are step functions, the sigmoid functions, for example the logistic function, the generalized logistic function, the hyperbolic tangent, the arctangent function, the error function, the smoothstep function, or rectifier functions. The transfer function is for example used for normalization purposes. In particular, the values are propagated layer-wise through the neural network 800, wherein values of the input layer 810 are given by the input of the neural network 800, wherein values of the first hidden layer 811 can be calculated based on the values of the input layer 810 of the neural network 800, wherein values of the second hidden layer 812 can be calculated based on the values of the first hidden layer 811, and so forth.

In order to set the values $w^{(m,n)}_{i,j}$ for the edges, the neural network 800 has to be trained using training data. In particular, training data comprises training input data and training output data (denoted as $t_i$). For a training step, the neural network 800 is applied to the training input data to generate calculated output data. In particular, the training data and the calculated output data comprise a number of values, said number being equal with the number of nodes of the output layer. In particular, a comparison between the calculated output data and the training data is used to recursively adapt the weights within the neural network 800 (backpropagation algorithm). In particular, the weights are changed according to

$$w_{i,j}^{\prime (n)} = w_{i,j}^{(n)} - \gamma \, \delta_j^{(n)} \, x_i^{(n)},$$

wherein $\gamma$ is a predefined learning rate, and the numbers $\delta^{(n)}_j$ can be recursively calculated as

$$\delta_j^{(n)} = \left( \sum_k \delta_k^{(n+1)} \, w_{j,k}^{(n+1)} \right) f' \left( x_i^{(n)} w_{i,j}^{(n)} \right)$$

based on $\delta^{(n+1)}_j$, if the (n+1)-th layer is not the output layer 813, and

$$\delta_j^{(n)} = \left( x_j^{(n+1)} - t_j^{(n+1)} \right) \, f' \left( x_i^{(n)} w_{i,j}^{(n)} \right),$$

if the (n+1)-th layer is the output layer 813, wherein f' is the first derivative of the activation function, and $t^{(n+1)}_j$ is the comparison training value for the j-th node of the output layer 813.

The MLM may, for example, be an ANN, in particular a convolution neural network (CNN).

A CNN is an ANN that uses a convolution operation instead of general matrix multiplication in at least one of its layers. These layers are denoted as convolutional layers. In particular, a convolutional layer performs a dot product of one or more convolution kernels with the convolutional layer's input data, wherein the entries of the one or more convolution kernel are parameters or weights that may be adapted by training. In particular, one can use the Frobenius inner product and the ReLU activation function. A convolutional neural network can comprise additional layers, for example pooling layers, fully connected layers, and/or normalization layers.

By using convolutional neural networks, the input can be processed in a very efficient way because a convolution operation based on different kernels can extract various image features so that by adapting the weights of the convolution kernel the relevant image features can be found during training. Furthermore, based on the weight-sharing in the convolutional kernels fewer parameters need to be trained, which prevents overfitting in the training phase and allows to have faster training or more layers in the network, improving the performance of the network.

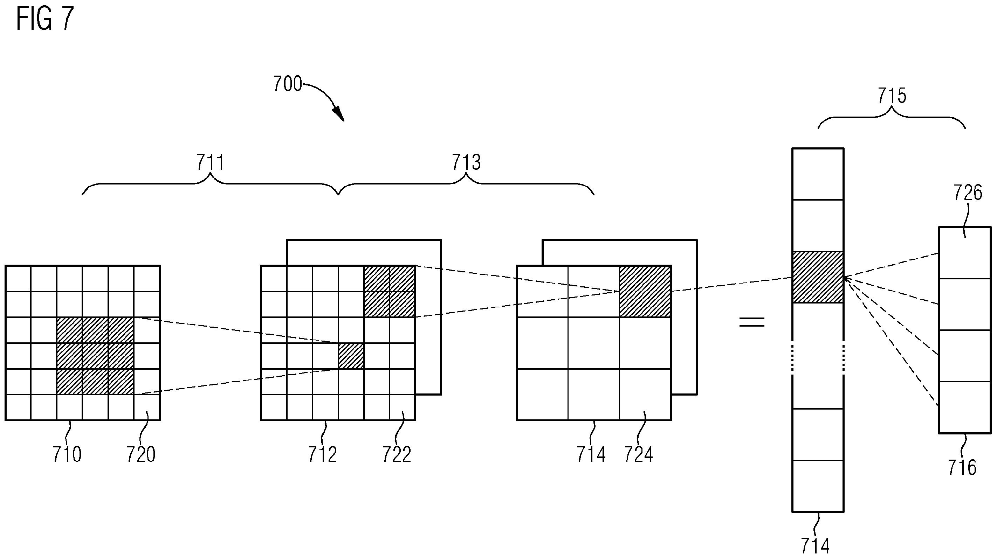

FIG 7 displays an exemplary embodiment of a convolutional neural network 700. In the displayed embodiment, the convolutional neural network 700 comprises an input node layer 710, a convolutional layer 711, a pooling layer 713, a fully connected layer 714 and an output node layer 716, as well as hidden node layers 712, 714. Alternatively, the convolutional neural network 200 can comprise several convolutional layers 711, several pooling layers 713 and/or several fully connected layers 715, as well as other types of layers. The order of the layers can be chosen arbitrarily, usually fully connected layers 715 are used as the last layers before the output layer 716.

In particular, within a convolutional neural network 700 nodes 720, 722, 724 of a node layer 710, 712, 714 can be considered to be arranged as a d-dimensional matrix or as a d-dimensional image. In particular, in the two-dimensional case the value of the node 720, 722, 724 indexed with i and j in the n-th node layer 710, 712, 714 can be denoted as x(n)[i, j]. However, the arrangement of the nodes 720, 722, 724 of one node layer 710, 712, 714 does not have an effect on the calculations executed within the convolutional neural network 700 as such, since these are given solely by the structure and the weights of the edges.

A convolutional layer 711 is a connection layer between an anterior node layer 710 with node values x(n-1) and a posterior node layer 712 with node values x(n). In particular, a convolutional layer 711 is characterized by the structure and the weights of the incoming edges forming a convolution operation based on a certain number of kernels. In particular, the structure and the weights of the edges of the convolutional layer 711 are chosen such that the values x(n) of the nodes 722 of the posterior node layer 712 are calculated as a convolution x(n) = K * x(n-1) based on the values x(n-1) of the nodes 720 anterior node layer 710, where the convolution * is defined in the two-dimensional case as

$$x^{(n)}[i,j] = \left(K * x^{(n-1)}\right)[i,j] = \sum_{i'}\sum_{j'} K[i',j'] \cdot x^{(n-1)}[i-i',j-j']$$

Herein, the kernel K is a d-dimensional matrix, in the present example a two-dimensional matrix, which is usually small compared to the number of nodes 720, 722, for example a 3x3 matrix, or a 5x5 matrix. In particular, this implies that the weights of the edges in the convolution layer 711 are not independent, but chosen such that they produce said convolution equation. In particular, for a kernel being a 3x3 matrix, there are only 9 independent weights, each entry of the kernel matrix corresponding to one independent weight, irrespectively of the number of nodes 720, 722 in the anterior node layer 710 and the posterior node layer 712.

In general, convolutional neural networks 700 use node layers 710, 712, 714 with a plurality of channels, in particular, due to the use of a plurality of kernels in convolutional layers 711. In those cases, the node layers can be considered as (d+1)-dimensional matrices, the first dimension indexing the channels. The action of a convolutional layer 711 is then in a two-dimensional example defined as

$$x_b^{(n)}[i,j] = \sum_a (K_{a,b} * x_a^{(n-1)}[i,j] = \sum_a\sum_{i'}\sum_{j'} K_{a,b}[i',j'] \cdot x_a^{(n-1)}[i-i',j-j'],$$

wherein $x_a^{(n)}$ corresponds to the a-th channel of the anterior node layer 710, $x_b^{(n)}$ corresponds to the b-th channel of the posterior node layer 712 and $K_{a,b}$ corresponds to one of the kernels. If a convolutional layer 711 acts on an anterior node layer 710 with A channels and outputs a posterior node layer 712 with B channels, there are A·B independent d-dimensional kernels $K_{a,b}$.

In general, in convolutional neural networks 700 activation functions may be used. In this embodiment, ReLU (rectified linear unit) is used, with R(z) = max(0, z), so that the action of the convolutional layer 711 in the two-dimensional example is

$$x_b^{(n)}[i,j] = R\left(\sum_a (K_{a,b} * x_a^{(n-1)}[i,j]\right) = R\left(\sum_a\sum_{i'}\sum_{j'} K_{a,b}[i',j'] \cdot x_a^{(n-1)}[i-i',j-j']\right).$$

It is also possible to use other activation functions, for example ELU (exponential linear unit), LeakyReLU, Sigmoid, Tanh or Softmax.

In the displayed embodiment, the input layer 710 comprises 36 nodes 720, arranged as a two-dimensional 6x6 matrix. The first hidden node layer 712 comprises 72 nodes 722, arranged as two two-dimensional 6x6 matrices, each of the two matrices being the result of a convolution of the values of the input layer with a 3x3 kernel within the convolutional layer 711. Equivalently, the nodes 722 of the first hidden node layer 712 can be interpreted as arranged as a three-dimensional 2x6x6 matrix, wherein the first dimension correspond to the channel dimension.

An advantage of using convolutional layers 711 is that spatially local correlation of the input data can exploited by enforcing a local connectivity pattern between nodes of adjacent layers, in particular by each node being connected to only a small region of the nodes of the preceding layer.

A pooling layer 713 is a connection layer between an anterior node layer 712 with node values x(n-1) and a posterior node layer 714 with node values x(n). In particular, a pooling layer 713 can be characterized by the structure and the weights of the edges and the activation function forming a pooling operation based on a non-linear pooling function f. For example, in the two-dimensional case the values x(n) of the nodes 724 of the posterior node layer 714 can be calculated based on the values x(n-1) of the nodes 722 of the anterior node layer 712 as

$$x_b^{(n)}[i,j] = f\left(x_b^{(n-1)}[id_1, jd_2], \dots, \quad x_b^{(n-1)}[(i+1)d_1 - 1, (j+1)d_2 - 1]\right)$$

In other words, by using a pooling layer 713, the number of nodes 722, 724 can be reduced by re-placing a number d1 d2 of neighboring nodes 722 in the anterior node layer 712 with a single node 722 in the posterior node layer 714 being calculated as a function of the values of said number of neighboring nodes. In particular, the pooling function f can be the max-function, the average or the L2-Norm. In particular, for a pooling layer 713 the weights of the incoming edges are fixed and are not modified by training.

The advantage of using a pooling layer 713 is that the number of nodes 722, 724 and the number of parameters is reduced. This leads to the amount of computation in the network being reduced and to a control of overfitting.

In the displayed embodiment, the pooling layer 713 is a max-pooling layer, replacing four neighboring nodes with only one node, the value being the maximum of the values of the four neighboring nodes. The max-pooling is applied to each d-dimensional matrix of the previous layer. In this embodiment, the max-pooling is applied to each of the two two-dimensional matrices, reducing the number of nodes from 72 to 18.

In general, the last layers of a convolutional neural network 700 may be fully connected layers 715. A fully connected layer 715 is a connection layer between an anterior node layer 714 and a posterior node layer 716. A fully connected layer 713 can be characterized by the fact that a majority, in particular, all edges between nodes 714 of the anterior node layer 714 and the nodes 716 of the posterior node layer are present, and wherein the weight of each of these edges can be adjusted individually.

In this embodiment, the nodes 724 of the anterior node layer 714 of the fully connected layer 715 are displayed both as two-dimensional matrices, and additionally as non-related nodes, indicated as a line of nodes, wherein the number of nodes was reduced for a better presentability. This operation is also denoted as flattening. In this embodiment, the number of nodes 726 in the posterior node layer 716 of the fully connected layer 715 smaller than the number of nodes 724 in the anterior node layer 714. Alternatively, the number of nodes 726 can be equal or larger.

Furthermore, in this embodiment the Softmax activation function is used within the fully connected layer 715. By applying the Softmax function, the sum the values of all nodes 726 of the output layer 716 is 1, and all values of all nodes 726 of the output layer 716 are real numbers between 0 and 1. In particular, if using the convolutional neural network 700 for categorizing input data, the values of the output layer 716 can be interpreted as the probability of the input data falling into one of the different categories.

In particular, convolutional neural networks 700 can be trained based on the backpropagation algorithm. For preventing overfitting, methods of regularization can be used, for example dropout of nodes 720, ... , 724, stochastic pooling, use of artificial data, weight decay based on the L1 or the L2 norm, or max norm constraints.

In summary, the invention relates to as system and method for artificial-intelligent-based organ at risk contouring for radiotherapy and uncertainty-based review.

The invention relates to a computer-implemented method and a method for reviewing at least one determined organ contour 1 in medical imaging data 2 comprising at least one image 3. The methods comprise: determining the at least one organ contour 1; determining an image uncertainty information 5 describing at least one area of the image 3 with a visual artifact 41; and/or determining an organ contour inaccuracy information 7 describing if the determination of the at least one organ contour 1 is inaccurate; and/or determining a warning information 9 describing a predetermined warning concerning the organ and/or an area surrounding the organ for which the organ contour 1 was determined; and determining review data 11 comprising the at least one image 3, the at least one organ contour 1 and at least one of the image uncertainty information 5, the organ contour inaccuracy information 7 and/or the d warning information 9.

**Claims**

1. Computer-implemented method for reviewing at least one determined organ contour (1) in medical imaging data (2), comprising:

   - determining the at least one organ contour (1) by applying an organ contour module (4) on the medical imaging data (2), wherein the medical imaging data (2) comprise at least one image (3) of at least a part of at least one organ;
   - determining an image uncertainty information (5) describing at least one area of the at least one image (3) with a visual artifact (41) by applying an image uncertainty module (6); and/or
   - determining an organ contour inaccuracy information (7) describing if the determination of the at least one organ contour (1) by the organ contour module (4) is inaccurate by applying an organ contour inaccuracy module (8); and/or
   - determining a warning information (9) describing a predetermined warning concerning the organ and/or an area surrounding the organ for which the organ contour (1) was determined by applying a warning module (10); and
- determining review data (11) comprising the at least one image (3) and the determined at least one organ contour (1) and at least one of the determined image uncertainty information (5), the determined organ contour inaccuracy information (7) and/or the determined warning information (9).

2. Computer-implemented method according to claim 1, wherein applying the organ contour module (4) comprises:

- receiving a request information (20) describing the at least one organ for which the organ contour (1) is requested;
- determining a region of interest (21) in the at least one image (3), in which the at least one organ is at least partially located, by applying a region of interest module (22) on the at least one image (3) and the received request information (20);
- determining the at least one organ contour (1) of the at least one organ by applying an organ specific neural network module (23) on the determined region of interest (21) in the at least one image (3).

3. Computer-implemented method according to claim 2, wherein if the received request information (20) describes multiple organs, applying the organ contour module (4) comprises determining multiple organ contours (1) and aggregating the multiple determined organ contours (1) in a unified organ contour representation.

4. Computer-implemented method according to claim 2 or 3, wherein applying the organ contour module (4) comprises applying at least one image processing module (24, 25, 26, 27) before determining the region of interest (21) and/or before applying the organ specific neural network module (23) and/or after applying the organ specific neural network module (23) and/or after aggregating the multiple determined organ contours (1) in the unified organ contour representation.

5. Computer-implemented method according to any one of the preceding claims, wherein the image uncertainty module (6) comprises at least one neural network module (13) trained to detect at least one predetermined visual artifact (41) in an image (3).

6. Computer-implemented method according to any one of the preceding claims, wherein the image uncertainty module (6) determines the image uncertainty information (5) on organ level and/or image pixel level.

7. Computer-implemented method according to any one of the preceding claims, wherein the organ contour inaccuracy module (8) is applied on a prediction score (14) output by the organ contour module (4).

8. Computer-implemented method according to claim 7, wherein the organ contour inaccuracy module (8) determines the organ contour inaccuracy information (7) on an image pixel level, wherein the determined organ contour inaccuracy information (7) describes the image pixels in the at least one image (3) that are part of the determined organ contour (1) for which the prediction score (14) is larger than a predetermined threshold (15), and/or a gradient of the prediction scores (14) of the image pixels in the at least one image (3) that are part of the determined organ contour (1).

9. Computer-implemented method according to any one of the preceding claims, wherein the warning module (10) comprises a predetermined list (16) of multiple predetermined warnings concerning multiple organs and/or areas surrounding at least one of the multiple organs, wherein applying the warning module (10) comprises determining all predetermined warnings in the predetermined list (16) that concern the organ for which the organ contour (1) was determined and/or another organ described by the at least one image (3).

10. Method for reviewing at least one determined organ contour (1) in medical imaging data (2), comprising:

- acquiring medical imaging data (2) comprising at least one image (3) of at least a part of at least one organ;
- performing a computer-implemented method according to any one of the preceding claims; and
- outputting the determined review data (11) by an output device (12).

11. Method according to claim 10, wherein the output review data (11) provides the at least one image (3) superimposed with the determined at least one organ contour (1) and/or with multiple options (48, 49) for the organ contour (1), in particular if the determined image uncertainty information (5) concerns the at least one organ contour (1) and/or if the determined organ contour inaccuracy information (7) describes that the determination of the at least one organ contour (1) by the organ contour module (4) is inaccurate.

12. Method according to claim 10 or 11, wherein the output review data (11) provides the determined image uncertainty information (5), the determined organ contour inaccuracy information (7) and/or the determined warning information (9) by a text notification (38, 45, 51, 52) and/or a bounding box (50) and/or a color-coded and/or hatching-coded marking (42, 43, 44) that superimpose the at least one image (3).

13. Method according to any one of claims 10 to 12, wherein the output review data (11) provides an interactive review menu (30) that lists the determined image uncertainty information (5), the determined organ contour inaccuracy information (7) and/or the determined warning information (9) and links each one of them to at least one image pixel of the at least one image (3) for which the image uncertainty information (5), the organ contour inaccuracy information (7) and/or the warning information (9) was determined.

14. Data processing system, configured to carry out a computer-implemented method according to any one of claims 1 to 9.

15. Computer program product comprising instructions, which, when executed by a data processing system, cause the data processing system to carry out a computer-implemented method according to any one of claims 1 to 9.

EP 4 715 737 A1

FIG 1

FIG 2

EP 4 715 737 A1

FIG 3

EP 4 715 737 A1

FIG 4

EP 4 715 737 A1

FIG 5

EP 4 715 737 A1

FIG 6

FIG 7

EP 4 715 737 A1

Europäisches
Patentamt

European
Patent Office

Office européen
des brevets

# EUROPEAN SEARCH REPORT

**Application Number**

EP 24 46 5574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/296287 A1 (TAYLOR CHARLES A [US]) 13 October 2016 (2016-10-13) | 1-8, 10-15 | INV. G06T7/12 |
| Y | * paragraph [0120] - paragraph [0153] * <br> * claim 187 * | 6,9 | |
| X | US 2021/312652 A1 (PADWAL MONALI [US] ET AL) 7 October 2021 (2021-10-07) | 1-8, 10-15 | |
| Y | * paragraph [0073] - paragraph [0108] * <br> * figures 7-14 * | 9 | |
| X | US 2012/134552 A1 (BOETTGER THOMAS [DE]) 31 May 2012 (2012-05-31) | 1-8, 10-15 | |
| Y | * paragraph [0004] - paragraph [0027] * <br> * paragraph [0041] - paragraph [0076] * <br> * figures 6, 7, 8 * | 6,9 | |
| X | NICOLAS F CHAVES-DE-PLAZA ET AL: "Report on AI-Infused Contouring Workflows for Adaptive Proton Therapy in the Head and Neck", <br> ARXIV.ORG, CORNELL UNIVERSITY LIBRARY, 201 OLIN LIBRARY CORNELL UNIVERSITY ITHACA, NY 14853, <br> 5 September 2022 (2022-09-05), <br> XP091309625, | 1-8, 10-15 | |
| | | | **TECHNICAL FIELDS SEARCHED (IPC)** |
| | | | G06T |
| Y | * 4.2-4.2.2 * <br> * figure 4.5 * | 6,9 | |
| X | US 2022/414402 A1 (SAWKEY DAREN [US]) 29 December 2022 (2022-12-29) | 1-4,6-8, 10-15 | |
| Y | * paragraph [0036] - paragraph [0080] * <br> * figure 3 * | 2,5,6,9 | |
| X | US 2021/264589 A1 (JACOB ATHIRA [US] ET AL) 26 August 2021 (2021-08-26) | 1,3,4, 6-8, 10-15 | |
| Y | * paragraph [0014] - paragraph [0038] * <br> * figure 4 * | 2,5,6,9 | |
| | -/-- | | |

The present search report has been drawn up for all claims

| Place of search | Date of completion of the search | Examiner |
|---|---|---|
| Munich | 19 February 2025 | Gitzenis, Savvas |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAWEL MLYNARSKI ET AL: "Anatomically Consistent Segmentation of Organs at Risk in MRI with Convolutional Neural Networks", ARXIV.ORG, CORNELL UNIVERSITY LIBRARY, 201 OLIN LIBRARY CORNELL UNIVERSITY ITHACA, NY 14853, 3 July 2019 (2019-07-03), XP081389211, | 1,3,4,6, 10-15 | |
| Y | * abstract * <br> * 4 * <br> * figures 1, 3 * | 2,7-9 | |
| | ----- | | |
| X | US 2023/230253 A1 (ALBRECHT THOMAS [CH] ET AL) 20 July 2023 (2023-07-20) | 1-4,9-15 | |
| Y | * paragraph [0007] - paragraph [0016] * <br> * paragraph [0037] * <br> * paragraph [0046] - paragraph [0069] * | 5-8 | |
| | ----- | | |
| | | | TECHNICAL FIELDS SEARCHED (IPC) |

The present search report has been drawn up for all claims

| Place of search | Date of completion of the search | Examiner |
|---|---|---|
| Munich | 19 February 2025 | Gitzenis, Savvas |

EPO FORM 1503 03.82 (P04C01)

page 2 of 2

## ANNEX TO THE EUROPEAN SEARCH REPORT
## ON EUROPEAN PATENT APPLICATION NO.

EP 24 46 5574

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | | Publication date | Patent family member(s) | | Publication date |
|---|---|---|---|---|---|
| US 2016296287 | A1 | 13-10-2016 | AU | 2011289715 A1 | 07-03-2013 |
| | | | AU | 2015275289 A1 | 28-01-2016 |
| | | | AU | 2015275298 A1 | 28-01-2016 |
| | | | AU | 2017203113 A1 | 01-06-2017 |
| | | | AU | 2017221811 A1 | 21-09-2017 |
| | | | AU | 2017279633 A1 | 18-01-2018 |
| | | | AU | 2018226375 A1 | 27-09-2018 |
| | | | AU | 2018267637 A1 | 13-12-2018 |
| | | | CA | 2807586 A1 | 16-02-2012 |
| | | | CA | 3027987 A1 | 16-02-2012 |
| | | | CA | 3064262 A1 | 16-02-2012 |
| | | | CN | 103270513 A | 28-08-2013 |
| | | | CN | 106994003 A | 01-08-2017 |
| | | | CN | 107007352 A | 04-08-2017 |
| | | | CN | 107122621 A | 01-09-2017 |
| | | | CN | 107174219 A | 19-09-2017 |
| | | | CN | 107184186 A | 22-09-2017 |
| | | | DE | 202011110620 U1 | 26-10-2015 |
| | | | DE | 202011110621 U1 | 24-09-2015 |
| | | | DE | 202011110672 U1 | 02-07-2015 |
| | | | DE | 202011110673 U1 | 02-09-2015 |
| | | | DE | 202011110674 U1 | 02-07-2015 |
| | | | DE | 202011110676 U1 | 02-07-2015 |
| | | | DE | 202011110677 U1 | 02-07-2015 |
| | | | DE | 202011110678 U1 | 02-07-2015 |
| | | | DE | 202011110679 U1 | 02-07-2015 |
| | | | DE | 202011110680 U1 | 02-07-2015 |
| | | | DE | 202011110771 U1 | 24-06-2016 |
| | | | DE | 202011110772 U1 | 24-06-2016 |
| | | | DE | 202011110774 U1 | 24-06-2016 |
| | | | DE | 202011110783 U1 | 22-08-2016 |
| | | | DE | 202011111113 U1 | 10-12-2019 |
| | | | DE | 202011111118 U1 | 01-01-2020 |
| | | | DE | 202011111119 U1 | 02-01-2020 |
| | | | EP | 2499589 A1 | 19-09-2012 |
| | | | EP | 2538361 A2 | 26-12-2012 |
| | | | EP | 2538362 A2 | 26-12-2012 |
| | | | EP | 2845537 A2 | 11-03-2015 |
| | | | EP | 2849107 A1 | 18-03-2015 |
| | | | EP | 2975545 A1 | 20-01-2016 |
| | | | EP | 3185156 A1 | 28-06-2017 |
| | | | EP | 4086919 A1 | 09-11-2022 |
| | | | JP | 5769352 B2 | 26-08-2015 |
| | | | JP | 5784208 B2 | 24-09-2015 |
| | | | JP | 5847278 B2 | 20-01-2016 |
| | | | JP | 5850583 B2 | 03-02-2016 |

EPO FORM P0459

For more details about this annex : see Official Journal of the European Patent Office, No. 12/82

page 1 of 5

## ANNEX TO THE EUROPEAN SEARCH REPORT
## ON EUROPEAN PATENT APPLICATION NO.

EP 24 46 5574

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | Publication date | Patent family member(s) | | Publication date |
|---|---|---|---|---|
| | | JP | 5850588 B2 | 03-02-2016 |
| | | JP | 5944606 B2 | 05-07-2016 |
| | | JP | 5944607 B1 | 05-07-2016 |
| | | JP | 5947990 B2 | 06-07-2016 |
| | | JP | 5986331 B2 | 06-09-2016 |
| | | JP | 6192864 B2 | 06-09-2017 |
| | | JP | 6221000 B2 | 25-10-2017 |
| | | JP | 6222882 B2 | 01-11-2017 |
| | | JP | 6329282 B2 | 23-05-2018 |
| | | JP | 6440755 B2 | 19-12-2018 |
| | | JP | 6700363 B2 | 27-05-2020 |
| | | JP | 6959391 B2 | 02-11-2021 |
| | | JP | 7304390 B2 | 06-07-2023 |
| | | JP | 7590499 B2 | 26-11-2024 |
| | | JP | 2013534154 A | 02-09-2013 |
| | | JP | 2014079649 A | 08-05-2014 |
| | | JP | 2015044036 A | 12-03-2015 |
| | | JP | 2015044037 A | 12-03-2015 |
| | | JP | 2015044038 A | 12-03-2015 |
| | | JP | 2015057103 A | 26-03-2015 |
| | | JP | 2016104327 A | 09-06-2016 |
| | | JP | 2016104328 A | 09-06-2016 |
| | | JP | 2016135265 A | 28-07-2016 |
| | | JP | 2016137261 A | 04-08-2016 |
| | | JP | 2017080492 A | 18-05-2017 |
| | | JP | 2017119151 A | 06-07-2017 |
| | | JP | 2017119152 A | 06-07-2017 |
| | | JP | 2017140390 A | 17-08-2017 |
| | | JP | 2017140391 A | 17-08-2017 |
| | | JP | 2019022712 A | 14-02-2019 |
| | | JP | 2020142096 A | 10-09-2020 |
| | | JP | 2022008936 A | 14-01-2022 |
| | | JP | 2023112190 A | 10-08-2023 |
| | | KR | 20130138739 A | 19-12-2013 |
| | | KR | 20140071495 A | 11-06-2014 |
| | | KR | 20150070446 A | 24-06-2015 |
| | | KR | 20160085919 A | 18-07-2016 |
| | | KR | 20160087392 A | 21-07-2016 |
| | | KR | 20160087393 A | 21-07-2016 |
| | | KR | 20170045390 A | 26-04-2017 |
| | | KR | 20170107105 A | 22-09-2017 |
| | | KR | 20180082640 A | 18-07-2018 |
| | | KR | 20190018559 A | 22-02-2019 |
| | | KR | 20200043500 A | 27-04-2020 |
| | | KR | 20200096670 A | 12-08-2020 |
| | | KR | 20220011782 A | 28-01-2022 |

EPO FORM P0459

For more details about this annex : see Official Journal of the European Patent Office, No. 12/82

page 2 of 5

## ANNEX TO THE EUROPEAN SEARCH REPORT
## ON EUROPEAN PATENT APPLICATION NO.

EP 24 46 5574

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | Publication date | Patent family member(s) | | Publication date |
|---|---|---|---|---|
| | | KR | 20220095252 A | 06-07-2022 |
| | | US | 2012041318 A1 | 16-02-2012 |
| | | US | 2012041319 A1 | 16-02-2012 |
| | | US | 2012041320 A1 | 16-02-2012 |
| | | US | 2012041321 A1 | 16-02-2012 |
| | | US | 2012041322 A1 | 16-02-2012 |
| | | US | 2012041323 A1 | 16-02-2012 |
| | | US | 2012041324 A1 | 16-02-2012 |
| | | US | 2012041735 A1 | 16-02-2012 |
| | | US | 2012041739 A1 | 16-02-2012 |
| | | US | 2012053919 A1 | 01-03-2012 |
| | | US | 2012053921 A1 | 01-03-2012 |
| | | US | 2012059246 A1 | 08-03-2012 |
| | | US | 2012150516 A1 | 14-06-2012 |
| | | US | 2013054214 A1 | 28-02-2013 |
| | | US | 2013064438 A1 | 14-03-2013 |
| | | US | 2013066618 A1 | 14-03-2013 |
| | | US | 2013151163 A1 | 13-06-2013 |
| | | US | 2013211728 A1 | 15-08-2013 |
| | | US | 2014107935 A1 | 17-04-2014 |
| | | US | 2014148693 A1 | 29-05-2014 |
| | | US | 2014155770 A1 | 05-06-2014 |
| | | US | 2014207432 A1 | 24-07-2014 |
| | | US | 2014222406 A1 | 07-08-2014 |
| | | US | 2014236492 A1 | 21-08-2014 |
| | | US | 2014243663 A1 | 28-08-2014 |
| | | US | 2014247970 A1 | 04-09-2014 |
| | | US | 2014249791 A1 | 04-09-2014 |
| | | US | 2014249792 A1 | 04-09-2014 |
| | | US | 2014348412 A1 | 27-11-2014 |
| | | US | 2014355859 A1 | 04-12-2014 |
| | | US | 2015073722 A1 | 12-03-2015 |
| | | US | 2015088015 A1 | 26-03-2015 |
| | | US | 2015088478 A1 | 26-03-2015 |
| | | US | 2015150530 A1 | 04-06-2015 |
| | | US | 2015161326 A1 | 11-06-2015 |
| | | US | 2015161348 A1 | 11-06-2015 |
| | | US | 2015201849 A1 | 23-07-2015 |
| | | US | 2015332015 A1 | 19-11-2015 |
| | | US | 2015339459 A1 | 26-11-2015 |
| | | US | 2015363941 A1 | 17-12-2015 |
| | | US | 2015379230 A1 | 31-12-2015 |
| | | US | 2016007945 A1 | 14-01-2016 |
| | | US | 2016073991 A1 | 17-03-2016 |
| | | US | 2016110517 A1 | 21-04-2016 |
| | | US | 2016110866 A1 | 21-04-2016 |

EPO FORM P0459

For more details about this annex : see Official Journal of the European Patent Office, No. 12/82

page 3 of 5

## ANNEX TO THE EUROPEAN SEARCH REPORT
## ON EUROPEAN PATENT APPLICATION NO.

EP 24 46 5574

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | Publication date | Patent family member(s) | Publication date |
|---|---|---|---|
| | | US 2016110867 A1 | 21-04-2016 |
| | | US 2016113528 A1 | 28-04-2016 |
| | | US 2016113726 A1 | 28-04-2016 |
| | | US 2016117815 A1 | 28-04-2016 |
| | | US 2016117816 A1 | 28-04-2016 |
| | | US 2016117819 A1 | 28-04-2016 |
| | | US 2016128661 A1 | 12-05-2016 |
| | | US 2016133015 A1 | 12-05-2016 |
| | | US 2016140313 A1 | 19-05-2016 |
| | | US 2016232667 A1 | 11-08-2016 |
| | | US 2016246939 A1 | 25-08-2016 |
| | | US 2016296287 A1 | 13-10-2016 |
| | | US 2016364859 A1 | 15-12-2016 |
| | | US 2016364860 A1 | 15-12-2016 |
| | | US 2016364861 A1 | 15-12-2016 |
| | | US 2016371455 A1 | 22-12-2016 |
| | | US 2017053092 A1 | 23-02-2017 |
| | | US 2017202621 A1 | 20-07-2017 |
| | | US 2017340392 A1 | 30-11-2017 |
| | | US 2018071027 A1 | 15-03-2018 |
| | | US 2018161104 A1 | 14-06-2018 |
| | | US 2018368916 A1 | 27-12-2018 |
| | | US 2019000554 A1 | 03-01-2019 |
| | | US 2020188029 A1 | 18-06-2020 |
| | | US 2021244475 A1 | 12-08-2021 |
| | | US 2021267690 A1 | 02-09-2021 |
| | | US 2021282860 A1 | 16-09-2021 |
| | | US 2022241019 A1 | 04-08-2022 |
| | | US 2023218347 A1 | 13-07-2023 |
| | | WO 2012021307 A2 | 16-02-2012 |
| US 2021312652 A1 | 07-10-2021 | CA 3174788 A1 | 14-10-2021 |
| | | CN 115916061 A | 04-04-2023 |
| | | EP 4132366 A1 | 15-02-2023 |
| | | JP 7461501 B2 | 03-04-2024 |
| | | JP 2023521738 A | 25-05-2023 |
| | | KR 20220163445 A | 09-12-2022 |
| | | US 2021312652 A1 | 07-10-2021 |
| | | US 2025025126 A1 | 23-01-2025 |
| | | WO 2021207226 A1 | 14-10-2021 |
| US 2012134552 A1 | 31-05-2012 | CN 102270342 A | 07-12-2011 |
| | | DE 102010022307 A1 | 01-12-2011 |
| | | US 2012134552 A1 | 31-05-2012 |
| US 2022414402 A1 | 29-12-2022 | CN 117616452 A | 27-02-2024 |

EPO FORM P0459

For more details about this annex : see Official Journal of the European Patent Office, No. 12/82

page 4 of 5

## ANNEX TO THE EUROPEAN SEARCH REPORT
## ON EUROPEAN PATENT APPLICATION NO.

EP 24 46 5574

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | | Publication date | Patent family member(s) | | Publication date |
|---|---|---|---|---|---|
| | | | EP | 4364087 A1 | 08-05-2024 |
| | | | US | 2022414402 A1 | 29-12-2022 |
| | | | WO | 2023278196 A1 | 05-01-2023 |
| US 2021264589 | A1 | 26-08-2021 | CN | 113362272 A | 07-09-2021 |
| | | | US | 2021264589 A1 | 26-08-2021 |
| US 2023230253 | A1 | 20-07-2023 | US | 2017084041 A1 | 23-03-2017 |
| | | | US | 2019172198 A1 | 06-06-2019 |
| | | | US | 2019172210 A1 | 06-06-2019 |
| | | | US | 2021166397 A1 | 03-06-2021 |
| | | | US | 2023230253 A1 | 20-07-2023 |

EPO FORM P0459

For more details about this annex : see Official Journal of the European Patent Office, No. 12/82

page 5 of 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11275976 B2
- US 11185231 B2

- US 10600185 B2